(19) Europäisches Patentamt

European Patent Office

Office européen des brevets

(11) **EP 0 758 093 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(51) Int Cl.$^7$: **G01S 13/34**, G01S 13/93

(21) Anmeldenummer: **96111287.7**

(22) Anmeldetag: **12.07.1996**

(54) **Radargerät mit reduzierter abgestrahlter Leistung**

Radar with reduced radiated power

Radar à puissance d'émission réduite

(84) Benannte Vertragsstaaten:
**DE FR GB IT**

(30) Priorität: **08.08.1995 DE 19529173**

(43) Veröffentlichungstag der Anmeldung:
**12.02.1997 Patentblatt 1997/07**

(73) Patentinhaber: **SIEMENS AKTIENGESELLSCHAFT**
**80333 München (DE)**

(72) Erfinder: **Höss, Alfred, Dr.**
**93105 Tegernheim (DE)**

(56) Entgegenhaltungen:
**EP-A- 0 569 095       WO-A-95/12824**
**US-A- 3 898 655       US-A- 5 369 409**

- **PATENT ABSTRACTS OF JAPAN Bd. 018, Nr. 048 (P-1682) 25 Januar 1994 & JP 05 273 340 A (HONDA MOTOR CO LTD) 22 Oktober 1993**

**Beschreibung**

Die Erfindung betrifft ein Radargerät zum Senden und zum Empfangen von kontinuierlich frequenzmodulierten Radarsignalen gemäß dem Oberbegriff des Anspruchs 1.

Das kontinuierlich frequenzmodulierte Radarsignal wird für die Abstandsmessung und die relative Geschwindigkeitsmessung im Straßenverkehr eingesetzt. Ein frequenzmoduliertes Dauerstrichradargerät (FMCW-Radargerät) zur Abstandsmessung und zur Messung der relativen Geschwindigkeit ist aus WO 95/12824 bekannt. Das FMCW-Radargerät ist an einem Fahrzeug angebracht und strahlt kontinuierlich Sendeleistung ab. Die Folge ist eine Anhebung des Mikrowellenrauschens in der Umgebung des Fahrzeugs.

Aus der Druckschrift US-A-3 898 655 ist ein Radargerät zum Ermitteln von Umgebungsinformationen für ein Kraftfahrzeug bekannt, bei dem der Zeitbereich innerhalb dessen ein Radarsignal ausgesendet wird, abhängig von der Fahrzeuggeschwindigkeit festgelegt.

Aus der Druckschrift JP 05273340 ist es auch bekannt, den Winkelbereich, in den der Sender eines Radargeräts Signale sendet, mit zunehmender Geschwindigkeit zu verkleinern.

Der Erfindung liegt die Aufgabe zugrunde, die vom Radargerät abgestrahlte Leistung im Mittel zu reduzieren, ohne die Meßempfindlichkeit zu beeinträchtigen. Dadurch wird erreicht, daß die Strahlenbelastung in der Umgebung des Fahrzeuges reduziert wird.

Die Aufgabe der Erfindung wird durch die Merkmale des Anspruchs 1 gelöst. Dabei wird der Zeitbereich, innerhalb dessen der Sender Radarsignale abstrahlt in Abhängigkeit von der Geschwindigkeit des Fahrzeuges, in das das Radargerät eingebaut ist, festgelegt. Der Zeitbereich wird mit abnehmender Geschwindigkeit verkleinert. Dies ist besonders im Stadtbereich, in dem niedrige Geschwindigkeiten gefahren werden, von Vorteil, da dadurch die Strahlungsleistung im Mittel, die vom Radargerät abgestrahlt wird, reduziert wird.

Eine weitere Reduzierung der Strahlungsbelastung wird dadurch erreicht, daß der Winkelbereich, in den Radarstrahlen ausgestrahlt werden, mit zunehmender Geschwindigkeit des Fahrzeuges verkleinert wird, und daß der Winkelbereich unsymmetrisch bezüglich der Fahrtrichtung des Fahrzeuges ausgerichtet ist.

Weitere vorteilhafte Ausbildungen und Verbesserungen der Erfindung sind in den Unteransprüchen dargestellt. Vorteilhaft ist es, den Zeitbereich, in dem Leistung abgestrahlt wird, um die Zeit zu verlängern, die der Sender benötigt, um einen vorgegebenen Sendezustand zu erreichen, d.h. um nach dem Einschalten einzuschwingen .

In vorteilhafter Weise ist ein Oszillator über einen Schalter mit einer Abstrahleinrichtung verbunden. Durch die Verwendung des Schalters ist es nicht notwendig, den Oszillator jeweils ein- und auszuschalten, sondern der Oszillator wird nur für einen vorgegebenen Zeitbereich mit der Abstrahleinrichtung verbunden.

Eine weitere vorteilhafte Ausbildung der Erfindung besteht darin, den Oszillator über einen Verstärker mit der Abstrahleinrichtung zu verbinden und den Verstärker entsprechend dem vorgegebenen Zeitbereich ein- und auszuschalten, indem z.B. die Betriebsspannung des Verstärkers ein- und ausgeschaltet wird.

Eine vorteilhafte Weiterbildung der Erfindung beruht darin, die Zeitabstände zwischen den Zeitbereichen, in denen Leistung abgestrahlt wird, mit sinkender Geschwindigkeit des Fahrzeuges zu vergrößern.

Zudem ist es vorteilhaft, unter einer vorgegebenen Geschwindigkeit, vor allem bei einem stehendem Fahrzeug, keine Radarsignale abzustrahlen, da in diesem Geschwindigkeitsbereich keine Information für eine adaptive Fahrgeschwindigkeitsregelung benötigt wird.

Die Erfindung wird anhand der Figuren näher erläutert. Es zeigen:

Figur 1: ein Blockschaltbild mit einem Radargerät,
Figur 2: einen ersten Sender,
Figur 3: einen zweiten Sender,
Figur 4: ein erstes Zeitdiagramm.
Figur 5: ein zweites Zeitdiagramm,
Figur 6: ein drittes Zeitdiagramm,
Figur 7: ein Geschwindigkeitsdiagramm,
Figur 8: ein Winkeldiagramm,
Figur 9: zwei Winkelbereiche und
Figur 10: ein Frequenzdiagramm.

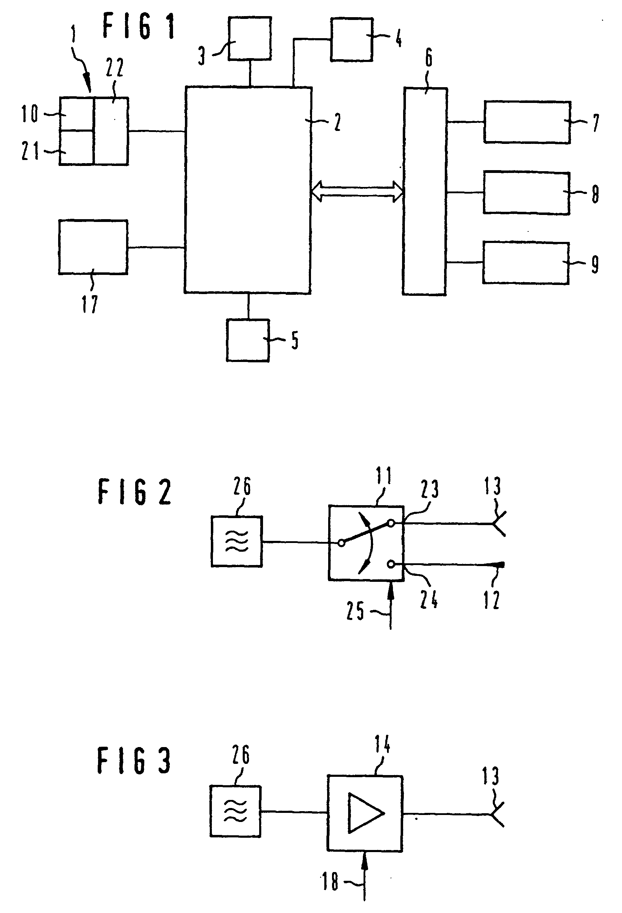

Figur 1 zeigt ein Radargerät 1, das über Daten- und Steuerleitungen mit einer Recheneinheit 2 verbunden ist. Die Recheneinheit 2 ist zudem über Datenleitungen mit einem Speicher 3, mit einer Anzeige 4 und mit einer Schnittstelle 5 verbunden. Weiterhin ist die Recheneinheit 2 über einen Datenbus 6 mit einem Steuergerät 7 für ein Automatikgetriebe, mit einem Motorsteuergerät 8 und mit einem Steuergerät 9 für ein Bremssystem verbunden. Die Recheneinheit 2 ist zudem über eine Datenleitung mit einem Geschwindigkeitssensor 17 verbunden. Die Anordnung nach Figur 1 ist in einem Fahrzeug eingebaut.

Das Radargerät 1 weist einen Sender 10, einen Empfänger 21 und eine Auswerteschaltung 22 auf. Der Sender 10 strahlt Radarsignale ab, die kontinuierlich frequenzmoduliert sind (Frequency-Modulated-Continuous-Waves). Der Empfänger empfängt die von einem Objekt reflektierten Radarsignale. Die Auswerteschaltung 22 ermittelt aus einem Vergleich der abgestrahlten Radarsignale mit den empfangenen Radarsignalen Informationen über die Umgebung, insbesondere den Abstand und die relative Geschwindigkeit eines Objektes.

Das Radargerät 1 stellt ein frequenzmoduliertes Dauerstrichradargerät dar, dessen Funktionsweise und Aufbau bereits aus WO 95/12824 bekannt ist.

Figur 2 zeigt einen Sender bestehend aus einem Hochfrequenzoszillator 26, der über eine Sendeleitung mit einem Eingang eines Schalters 11 verbunden ist. Der Schalter 11 weist zwei Ausgänge auf, wobei der erste Ausgang 23 mit einer Abstrahleinrichtung 13 verbunden ist und der zweite Ausgang 24 mit einer Strahlungssenke 12 verbunden ist. Die Abstrahleinrichtung 13 ist als Antenne ausgebildet. Die Strahlungssenke 12 stellt einen Sumpf dar, der zugeführte Radarsignale absorbiert und ein Abstrahlen des Radarsignals verhindert. Entsprechend der Stellung des Schalters 11 ist der Sender 10 wahlweise mit der Abstrahleinrichtung 13 oder der Strahlungssenke 12 verbunden. Der Schalter 11 ist über eine erste Steuerleitung 25 vom Radargerät 1 umschaltbar.

Figur 3 zeigt einen Sender, bei dem der Hochfrequenzoszillator 26 als spannungsgesteuerter Gallium-Arsenid-Oszillator ausgebildet ist. Der Hochfrequenzoszillator 26 ist über eine Sendeleitung mit einem Verstärker 14 verbunden. Der Verstärker 14 ist über eine Ausgangsleitung mit einer Abstrahleinrichtung 13 verbunden. Die Betriebsspannung des Verstärkers 14 ist über eine zweite Steuerleitung 18 vom Radargerät 1 ein- und ausschaltbar.

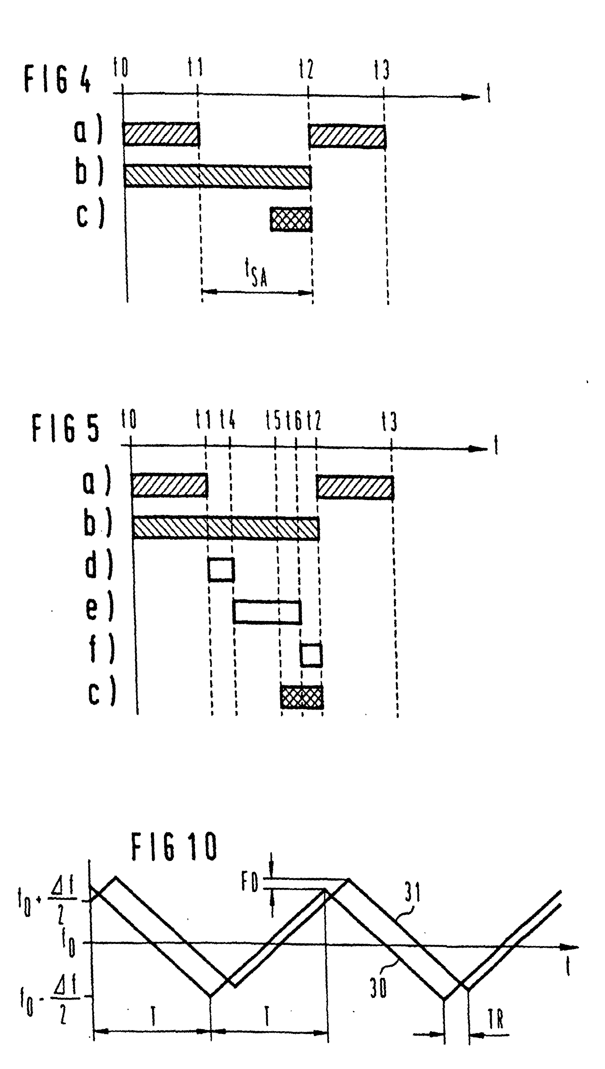

Figur 4 zeigt ein Zeitdiagramm, das verschiedene Betriebszustände des Radargerätes 1 in Abhängigkeit von der Zeit darstellt. In dem Zeitdiagramm ist nach rechts die Zeit t aufgetragen. Die Betriebszustände des Radargerätes 1 sind in Form von Balken dargestellt, wobei die Ausdehnung eines Balkens in Richtung der Zeitachse den Zeitbereich des entsprechenden Betriebszustandes festlegt.

Ein erster Balken a kennzeichnet den Zeitbereich, innerhalb dessen der Sender 10 Radarsignales abstrahlt und gleichzeitig reflektierte Radarsignale vom Empfänger 21 empfangen werden. Dieser Zeitbereich reicht vom Zeitpunkt t0 bis zum Zeitpunkt t1.

Ein zweiter Balken b stellt den Zeitbereich dar, innerhalb dessen die Auswerteeinheit 22 die abgestrahlten und die empfangenen Radarsignale auswertet. Die Auswertung dauert vom Zeitpunkt t0 bis zum Zeitpunkt t2.

Nach dem Abschluß der Auswertung wird wieder ein Radarsignal von dem Sender 10 in der Zeitspanne von t2 bis t3 abgestrahlt und vom Empfänger 21 empfangen. Wird jeweils ein Sender 10 für einen Teilwinkelbereich des Winkelbereiches verwendet, wobei die Sender 10 nacheinander ein- und ausgeschaltet werden, so ist eine Umschaltung zwischen den Sendern 10 notwendig. Die Umschaltung ist mit einem dritten Balken c dargestellt.

Aus Figur 4 ist zu erkennen, daß Leistung nur in den Zeitbereichen von t0 bis t1 und von t2 bis t3 abgestrahlt wird. Somit wird die abgestrahlte Leistung im zeitlichen Mittel im Vergleich zu bisherigen Systemen, die dauernd abstrahlen, um den Faktor (t1 - t0)/(t2 - t1) reduziert, da in einem Zeitabstand von t1 bis t2 keine Leistung abgestrahlt wird. Die Betriebszustände des Radargerätes von t0 bis t2 werden kontinuierlich wiederholt.

Figur 5 zeigt ein Zeitdiagramm entsprechend Figur 4, wobei zu den Betriebszuständen Senden und Empfangen a, Auswertung b und Senderumschaltung c weitere Betriebszustände wie: Abschaltvorgang des Senders d, Auszustand des Senders e und Einschaltvorgang des Senders f angegeben sind. Die Betriebszustände Abschaltvorgang des Senders d und Einschaltvorgang des Senders f sind bei der Steuerung des Senders 10 zu berücksichtigen, da Ein- und Ausschwingvorgänge des Senders 10 beim Ein- und Ausschalten auftreten können.

Ein vierter Balken d gibt den Zeitbereich an, den der Sender benötigt, um nach dem Abschaltsignal die abgestrahlte Leistung auf den Wert Null zu reduzieren.

Ein fünfter Balken f zeigt den Zeitbereich an, den der Sender 10 benötigt, um nach einem Einschaltsignal die abgestrahlte Leistung auf einen vorgegebenen Wert, der für die Ermittlung der Informationen über die Umgebung, wie z.B. Abstand zu einem vorausfahrenden Fahrzeug oder Relativgeschwindigkeit gegenüber einem vorausfahrenden Fahrzeug, benötigt wird. Der Zeitbereich, während dessen der Sender 10 keine Leistung abgestrahlt, ist mit einem fünften Balken e dargestellt, der sich von dem Zeitpunkt t4 bis zu dem Zeitpunkt t6 erstreckt.

In den Zeiträumen von dem Zeitpunkt t1 bis zu dem Zeitpunkt t4 (d) und von dem Zeitpunkt t6 bis zu dem Zeitpunkt t2 (f) wird vom Sender 10 eine reduzierte Leistung abgestrahlt.

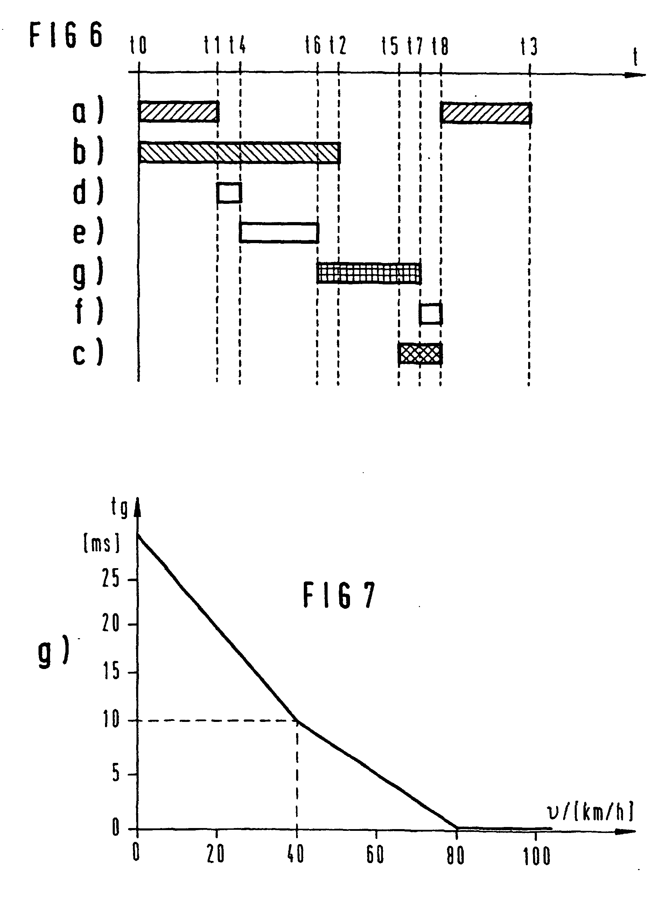

Figur 6 zeigt ein Zeitdiagramm entsprechend Figur 5, wobei jedoch eine Pause g zwischen dem Auszustand e des Senders und dem Einschaltvorgang f des Sender angegeben ist. Die Pause g, die sich von dem Zeitpunkt t6 bis zu dem Zeitpunkt t7 erstreckt, ergibt sich dadurch, daß bei einer niedrigen Geschwindigkeit des Fahrzeuges die Zeitabstände zwischen dem Abstrahlen a von Radarsignalen verlängert wird, da die zurückgelegte Strecke pro Sekunde relativ gering ist und deshalb sich die Umgebung nicht schnell ändert, so daß eine niedrigere Wiederholrate des Betriebszustandes Senden und Empfangen a ausreicht.

Das Einfügen einer Pause g zwischen zwei aufeinander folgenden Sende- und Empfangszuständen a des Radargerätes stellt eine vorzugsweise Weiterbildung der Erfindung dar. Die in Figur 6 zwischen dem Zeitpunkt t0 und t3 dargestellten Betriebszustände werden kontinuierlich wiederholt.

Figur 7 zeigt ein Diagramm, bei dem die zeitliche Länge $t_g$ der Pause g in Millisekunden gegen die Geschwindigkeit v eines Fahrzeuges, in das das Radargerät 1 integriert ist, in Kilometer/Stunde aufgetragen ist. Anhand des Diagramms ist zu erkennen, daß bei einer Geschwindigkeit von 80 km/h die zusätzliche Pause g eine Zeitdauer von $t_g$ = 0 erhält. Bei einer Geschwindigkeit von 40 km/h ergibt sich eine zeitliche Länge $t_g$ von 10 ms. Die Abhängigkeit der Zeitdauer $t_g$ ist in dem Speicher 3 abgelegt. Die Recheneinheit 2 ermittelt mit Hilfe des Geschwindigkeitssensors 17 die eigene Geschwindigkeit und wählt anhand der im Speicher 3 abgelegten Kennlinie der Figur 7 die Länge $t_g$ der Pause g.

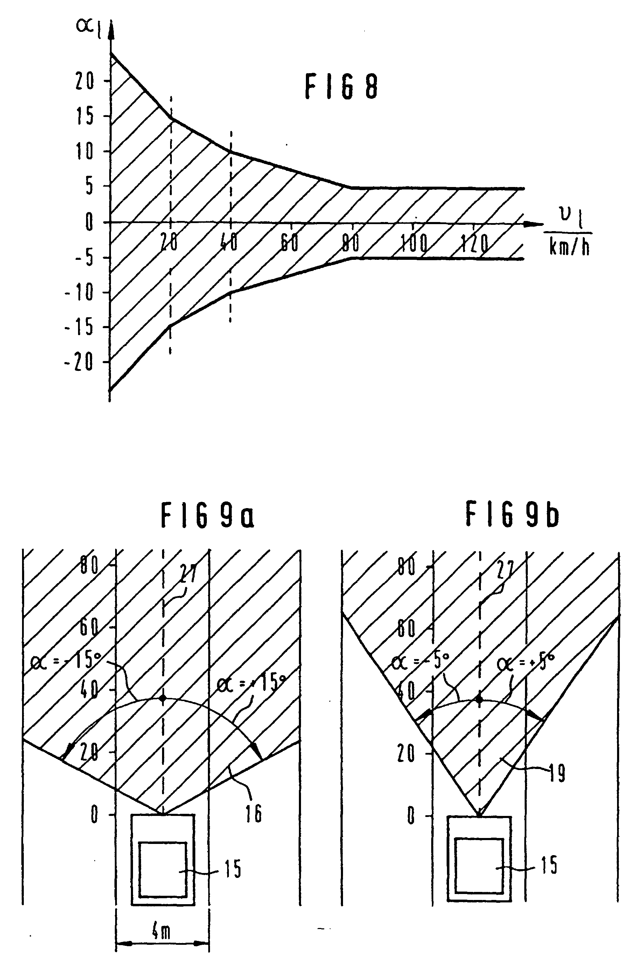

Eine weitere vorteilhafte Ausbildung der Erfindung zeigt Figur 8, die die Abhängigkeit des Abstrahlungswinkels α in Abhängigkeit von der gefahrenen Geschwindigkeit darstellt. In dem Diagramm ist nach oben ein Winkelbereich α in Winkelgrad und nach rechts die Geschwindigkeit des eigenen Fahrzeuges in Kilometer/ Stunde aufgetragen. Der Winkelbereich von 0° entspricht einer Linie, die senkrecht in Fahrtrichtung ausgehend vom Mittelpunkt des Fahrzeuges zeigt.

Die Abhängigkeit des Winkelbereichs α von der Geschwindigkeit ist in Form einer Kurve für positive und negative Winkelbereiche aufgetragen. Ein positiver Winkelbereich ist ausgehend von der Mitte des Fahrzeuges nach rechts in Fahrtrichtung und ein negativer Winkelbereich ist ausgehend von der Mitte des Fahrzeugs nach links in Fahrtrichtung angeordnet.

Bei einer Geschwindigkeit von 20 km/h ergibt sich ein positiver und negativer Winkelbereich ± 15°. Bei einer Geschwindigkeit von 40 km/h ergibt sich ein positiver und ein negativer Winkelbereich von ± 10°. Die Werte der Winkelbereiche sind für eine Geschwindigkeit im allgemeinen für den positiven und negativen Winkelbereich dem Betrage nach gleich groß. Die Abhängigkeit des Winkelbereiches in Abhängigkeit von der Geschwindigkeit ist im Speicher 3 abgelegt. Die Recheneinheit 2 ermittelt mit Hilfe des Geschwindigkeitssensors 17 die gefahrene Geschwindigkeit und legt entsprechend der Figur 8 den Winkelbereich für das Radargerät 1 fest. Der Winkelbereich α wird in den Geschwindigkeitsbereich von 0 bis 20 km/h durch eine Gerade mit einer ersten Steigung, in dem Geschwindigkeitsbereich von 20 bis 40 km/h durch eine Gerade mit einer zweiten Steigung, die kleiner als die erste Steigung ist, beschrieben.

In dem Geschwindigkeitsbereich von 40 bis 80 km/h ist der Winkelbereich α durch eine Gerade mit einer dritten Steigung, die kleiner als die zweite Steigung ist, festgelegt. Für Geschwindigkeiten gleich und größer als 80 km/h ist der Winkelbereich α auf einen vorgegebenen Wert, in diesem Ausführungsbeispiel auf ± 5° festgelegt.

Die positiven und negativen Winkelbereiche sind anhand von zwei Beispielen in Figur 9 dargestellt. In Figur 9a ist ein Fahrzeug 15 dargestellt, dessen Radargerät in einen Winkelbereich 16 von ± 15° Radarsignale abstrahlt. Dies wird in Form eines elektronisch scannenden Senders 10 und Empfängers 21 oder mit Hilfe mehrerer Sender 10 und Empfänger 21 erreicht, die jeweils einem Teilwinkelbereich des Winkelbereiches 16 zugeordnet sind.

Der Winkelbereich 16 von ± 15° entspricht, wie Figur 8 zu entnehmen ist, einer Geschwindigkeit des Fahrzeuges von 20 km/h. Der Winkelbereich 16 weist einen positiven und einen negativen Winkelbereich auf. Ausgehend von einer Mittenlinie 27, die sich von Mitte des Fahrzeuges 15 in Fahrtrichtung erstreckt, erstrecken sich der positive und der negative Winkelbereich von der Mitte des Fahrzeuges ausgehend in seitlicher Richtung.

Figur 9b zeigt ein Fahrzeug 15 mit einem Winkelbereich 19, der einen positiven und negativen Winkelbereich α von ± 5° darstellt. Entsprechend der Figur 8 entspricht der Winkelbereich von ± 5° einer Geschwindigkeit des Fahrzeuges 15 von 80 km/h oder mehr.

Eine vorteilhafte Weiterbildung der Erfindung beruht darin, daß der negative Winkelbereich und der positive Winkelbereich unterschiedlich groß sind, d.h. der Winkelbereich asymmetrisch ist. Damit werden Bereiche, über die keine Information benötigt wird, nicht mit Radarsignalen abgetastet. Auf diese Weise wird die Strahlenbelastung für Bereiche, die an die Fahrbahn anschließen wie z.B. Fahrradwege oder Fußgängerwege zusätzlich erniedrigt. Beispielsweise ist bei Rechtsverkehr oder Linksverkehr der positive (rechte) Winkelbereich kleiner als der negative (linke) Winkelbereich bzw. der positive Winkelbereich größer als der negative Winkelbereich. Beim Fahren von Kurven sind der positive und der negative Winkelbereich entsprechend den Fahrsituationen angepaßt. Die Größe der negativen und positiven Winkelbereiche sind im Speicher 3 enthalten.

Das Radargerät wird vorzugsweise zur Bestimmung des Abstandes und der relativen Geschwindigkeit eines vorausfahrenden Fahrzeuges für eine adaptive Fahrgeschwindigkeitsregelung eingesetzt.

Figur 10 zeigt ein Frequenzdiagramm, anhand dessen die Abhängigkeit des Sendezustandes des Senders 10 von der Reichweite, der Auflösung und dem Modulationshub beschrieben wird. Eine maximale Abtastfrequenz FA ist durch die maximale analoge Zwischenfrequenz $FB_{max}$ des empfangenen Radarsignals nach folgender Beziehung vorgegeben: $FB_{max} \leq FA/2$. Die maximale Zwischenfrequenz $FB_{max}$ setzt sich zusammen aus der Summe der Entfernungsfrequenzverschiebung FR und der Dopplerfrequenzverschiebung FD: $FB_{max} = (FR + |FD|)_{max}$.

Die Entfernungsfrequenzverschiebung FR berechnet sich aus: $FR = 2 \cdot (\Delta f/T) \cdot (R/Co)$, wobei mit ΔF der Modulationshub, mit T die Modulationsdauer, mit R die Reichweite und mit Co die Lichtgeschwindigkeit bezeichnet ist. Die Modulationsrate ist durch den Quotienten aus $(\Delta f/T)$ bezeichnet. Die Entfernungsfrequenzverschiebung FR hängt somit von der Modulationsrate sowie der Entfernung R eines Objektes ab, von dem die Entfernung oder die relative Geschwindigkeit ermittelt wird.

Die Dopplerfrequenzverschiebung FD berechnet sich aus folgender Formel: $FD = (2Vr/\lambda o)$, wobei mit $\lambda o = (Co/fo)$ die Wellenlänge der Radarsignale und mit Vr die relative Geschwindigkeit bezeichnet sind. Co ist die Lichtgeschwindigkeit und fo ist die Mittenfrequenz des Radarsignals.

Für die Beschreibung des folgenden Beispiels wird davon ausgegangen, daß die maximale analoge Zwischenfrequenz $FB_{max}$ 100 kHz beträgt und die Dopplerfrequenzverschiebung FD gleich null ist, d.h. keine relative Geschwindigkeit zwischen dem eigenen Fahrzeug und dem zum vermessenden Objekt besteht. Daraus ergibt sich folgende Beziehnung:

$$FBmax = FR = 2 \cdot (\Delta f/T) \cdot (R_{max}/CO),$$

d.h. FBmax ist proportional zu $(\Delta f/T) \cdot R_{max}$. Der Modulationshub $\Delta F$ ist unabhängig von der Modulationsdauer T konstant zu wählen, da durch den Modulationshub das axiale Trennvermögen bestimmt ist, das konstant bleiben soll. Die Modulationsdauer T ist somit invers proportional zur Reichweite $R_{max}$. Bei hohen Geschwindigkeiten ist eine große Reichweite $R_{max}$ des Radargerätes notwendig, da der Bremsweg entsprechend der Geschwindigkeit entsprechend groß ist und deshalb z. B. ein stehendes Objekt rechtzeitig erkannt werden muß, um noch bremsen zu können.

Bei niedrigen Geschwindigkeiten, die z.B. kleiner als 60 km/h sind, reicht eine kleinere Reichweite als die maximale Reichweite $R_{max}$ von 200 m aus. Für eine Geschwindigkeit von 50 km/h wird eine Reichweite von 70 m verwendet. Die Ursache hierfür liegt im Mindestanhalteweg vor einem stehenden Objekt, wobei die maximale Verzögerung $A_{max}$ in typischer Weise als 2 m/s² für ein adaptives Fahrgeschwindigkeitsregelsystem angenommen wird. Der Mindestanhalteweg $D_{min}$ ergibt sich somit aus: $D_{min} = (Ve^2/2\ A_{max})$ wobei Ve die Geschwindigkeit des Fahrzeugs in m/s und $A_{max}$ die maximale Verzögerung des Fahrzeuges in m/s² ist. Bei niedrigen Geschwindigkeiten (Ve < 60 km/h) für den Stadtverkehr reicht eine geringe Reichweite R des Radargerätes aus und es treten keine beliebig großen Relativgeschwindigkeiten zwischen den Fahrzeugen auf, so daß die Modulationsrate ($\Delta f/T$) bei konstantem Modulationshub größer gewählt werden kann als für größere Geschwindigkeiten VE > 60 km/h, die vorwiegend auf Autobahnen und Landstraßen gefahren werden.

Die Modulationsrate ist durch folgende Formel beschrieben: $(\Delta f/T) = (FR_{max} \cdot CO)/(2 \cdot R_{max})$, wobei mit $R_{max}$ die maximale Reichweite des Radargerätes für niedrige Geschwindigkeiten auf 70 m festgelegt ist und $FR_{max}$ auf 100 kHz festgelegt ist. Da der Modulationshub $\Delta f$ konstant bleibt, wird bei einer größeren Modulationsrate ($\Delta f/T$) der Modulationshub $\Delta f$ in einer kürzeren Zeit durchlaufen. Daraus folgt, daß bei einer kleineren Reichweite $R_{max}$ dementsprechend die Modulationsdauer T kürzer gewählt wird.

Je niedriger die Geschwindigkeit des Fahrzeuges ist, desto kleiner wird die Reichweite des Radargerätes 1 von der Recheneinheit 2 gewählt und umso kürzer wird bei dem festgelegten Modulationshub die Modulationsdauer T und umso kürzer wird die Sendezeit für den Sender 10, um einen Modulationshub zu senden. Die Folge ist, daß auch die Zeit, für den Empfang eines Modulationshubes kürzer wird. Damit wird auch die Dauer des Empfangszustandes des Radargerätes 1 mit abnehmender Geschwindigkeit des Fahrzeuges kleiner.

Die Recheneinheit 2 ermittelt die Geschwindigkeit des Fahrzeuges und stellt in Abhängigkeit davon die Modulationsdauer T des Senders 10 und damit die Sendezeit des Senders 10 ein.

Durch die Anpassung der Dauer der Sendezeit des Senders 10 an die momentan gefahrene Geschwindigkeit wird die mittlere Leistung, die vom Sender 10 abgestrahlt wird, reduziert.

Bei Erhöhung der Modulationsrate bleibt sowohl die Entfernungsauflösung wie auch die Entfernungsgenauigkeit konstant.

Figur 10 zeigt ein vom Sender 10 ausgesendetes Radarsignal 30 und ein vom Empfänger 21 empfangenes Radarsignal 31. In der Figur 10 ist die Frequenz der Radarsignale gegen die Zeit aufgetragen. Innerhalb der Modulationsdauer T wird eine aufsteigende oder eine absteigende Flanke des Radarsignals vom Sender 10 ausgesendet. Mit aufsteigender Flanke wird der Teil des Radarsignals bezeichnet, der von einer minimalen Frequenz (fo-$\Delta f$/2) bis zu einer maximalen Frequenz (fo+$\Delta f$/2) frequenzmoduliert ausgesendet wird. Mit absteigenden Flanke wird der Teil des Radarsignals bezeichnet, der von einer maximalen Frequenz (fo+$\Delta f$/2) zu einer minimalen Frequenz (fo-$\Delta f$/2) frequenzmoduliert ausgesendet wird.

Die Auswerteschaltung 22 ermittelt aus dem Vergleich des ausgesendeten Radarsignales 30 und des empfangenen Radarsignales 31 die Laufzeit TR. Aus der Laufzeit TR ist mit folgender Beziehung der Abstand zu dem Objekt, das das ausgesendete Radarsignal reflektiert, nach folgender Formel berechenbar: TR = (2R/Co), wobei mit R der Abstand zwischen dem eigenen Fahrzeug und dem Objekt und mit Co die Lichtgeschwindigkeit bezeichnet ist.

Zudem ermittelt die Auswerteschaltung 22 die Frequenzverschiebung zwischen dem ausgesendeten Radarsignal 30 und dem empfangenen Radarsignal 31, die sich auch aufgrund der Entfernung ergibt FR = (2·$\Delta f$·R)/(T·Co), wobei mit $\Delta f$ der Frequenzhub, mit R die Entfernung, mit T die Modulationsdauer und mit Co die Lichtgeschwindigkeit bezeichnet ist.

Die Dopplerfrequenzverschiebung FD wird ebenfalls von der Auswerteschaltung 22 aus dem Vergleich des gesendeten Radarsignals 30 und des empfangenen Radarsignals 31 aufgrund von folgender Formel ermittelt: FD = (2·Vr/$\lambda$0), wobei mit Vr die Relativgeschwindigkeit und mit $\lambda$0 die Wellenlänge des Radarsignals für die Mittenfrequenz fo bezeichnet ist. Aus der Dopplerfrequenzverschiebung FD ist somit die Relativgeschwindigkeit ermittelbar.

Die Auswerteschaltung 22 vegleicht zur Ermittlung des Abstandes und der relativen Geschwindigkeit wenigstens eine aufsteigende oder eine absteigende Flanke des gesendeten Radarsignals mit wenigstens einer aufsteigende oder einer absteigenden Flanke des empfangenen Radarsignals. Bevorzugt werden jedoch eine aufsteigende und eine absteigende Flanke des gesendeten Radarsignals mit einer aufsteigenden und einer absteigenden Flanke des empfangenen Radarsignals verglichen. Der Sender 10 sendet deshalb wenigstens eine aufsteigende oder eine absteigende Flanke des Radarsignals in einem Zeitbereich (in einem Sendezustand)aus.

**Patentansprüche**

1. Radargerät mit einem Sender und einem Empfänger zum Senden und Empfangen von Radarsignalen, mit einer Auswerteschaltung, die durch einen Vergleich der gesendeten und der empfangenen Radarsignale eine Information über die Umgebung, insbesondere einen Abstand und eine relative Geschwindigkeit zu einem Objekt, ermittelt, wobei

   - das Radargerät an einem Fahrzeug befestigt ist und
   - der Sender (10) Radarsignale nur innerhalb eines Zeitbereichs ausstrahlt, der in Abhängigkeit von der Geschwindigkeit des Fahrzeuges (15) in der Weise festgelegt ist, daß der Zeitbereich bei einer größeren Geschwindigkeit länger und bei einer kleineren Geschwindigkeit kürzer ist,

   **dadurch gekennzeichnet,**

   - **daß** der Sender und der Empfänger kontinuierlich frequenzmodulierte Radarsignale senden und empfangen,
   - **daß** der Zeitbereich derart festgelegt wird, daß wenigstens eine aufsteigende oder eine absteigende Flanke des Radarsignals gesendet werden kann,
   - **daß** der Winkelbereich (16;19), in den der Sender (10) Radarsignale abstrahlt, in Fahrtrichtung des Fahrzeuges (16) angeordnet ist, und daß in Abhängigkeit von der Geschwindigkeit des Fahrzeuges (15) der Winkelbereich (16;19) mit zunehmender Geschwindigkeit des Fahrzeuges (15) verkleinert ist und
   - **daß** der Winkelbereich (16;19) unsymmetrisch in Bezug auf die Fahrtrichtung des Fahrzeuges (15) ausgerichtet ist.

2. Radargerät nach Anspruch 1, **dadurch gekennzeichnet, daß** der Zeitbereich um die Zeit verlängert ist, die der Sender benötigt, um einen vorgegebenen Sendezustand (a), zu erreichen, der durch eine vorgegebene Sendeleistung und/oder Frequenzstabilität festgelegt ist.

3. Radargerät nach Anspruch 1, **dadurch gekennzeichnet, daß** ein Oszillator (26) des Radargerätes (1) über einen Schalter (11) mit einer Abstrahleinrichtung (13) verbindbar ist, und daß der Oszillator (26) nur für den Zeitbereich mit der Abstrahleinrichtung (13) verbunden ist.

4. Radargerät nach Anspruch 1, **dadurch gekennzeichnet, daß** ein Oszillator (26) des Radargerätes (1) über einen Verstärker (14) mit einer Abstrahleinrichtung (13) verbunden ist, und daß der Verstärker (14) für den Zeitbereich auf Verstärkung geschaltet ist.

5. Radargerät nach Anspruch 1, **dadurch gekennzeichnet, daß** Zeitabstände, in denen der Sender (10) keine Radarsignale sendet, in Abhängigkeit von der Geschwindigkeit des Fahrzeuges in der Weise angepaßt sind, daß die Zeitabstände mit kleinerer Geschwindigkeit größer werden.

6. Radargerät nach Anspruch 5, **dadurch gekennzeichnet, daß** unterhalb einer vorgegebenen Geschwindigkeit des Fahrzeuges (15) der Sender (10) keine Radarsignale sendet.

7. Radargerät nach Anspruch 1, **dadurch gekennzeichnet, daß** der Zustand, in dem der Empfänger (21) in Betrieb ist, in der Weise an die Geschwindigkeit angepaßt ist, daß mit kleinerer Geschwindigkeit des Fahrzeuges (15) der Zustand, in dem der Empfänger (21) in Betrieb ist, kürzer ist.

**Claims**

1. A radar device having a transmitter and a receiver for transmitting and receiving radar signals, and having an evaluation circuit which, on the basis of a comparison between the transmitted and received radar signals, determines information about the environment, in particular a distance from and a relative speed in respect of an object, wherein

   - the radar device is attached to a vehicle, and
   - the transmitter (10) only radiates radar signals within a time segment which is established as a function of the speed of the vehicle (15) and such that said time segment is longer at a higher speed and shorter at a lower speed,

**characterised in that**

- the transmitter and the receiver transmit and receive continuously frequency-modulated radar signals,
- the time segment is established such that at least one rising or one falling edge of the radar signal can be transmitted,
- the field of angle (16;19) in which the transmitter (10) radiates radar signals is arranged in the direction of travel of the vehicle (16), and that the field of angle (16;19) being dependent on the speed of the vehicle (15) is reduced as the speed of the vehicle (15) increases, and
- the field of angle (16;19) is aligned asymmetrically in relation to the direction of travel of the vehicle (15).

2. The radar device as claimed in Claim 1, **characterised in that** the time segment is extended by the time required by the transmitter to reach a predetermined transmit state (a) which is established by a predetermined transmission power and/or frequency stability.

3. The radar device as claimed in Claim 1, **characterised in that** an oscillator (26) of the radar device (1) can be connected to a radiating device (13) via a switch (11) and that the oscillator (26) is only connected to the radiating device (13) for the time segment.

4. The radar device as claimed in Claim 1, **characterised in that** an oscillator (26) of the radar device (1) is connected to a radiating device (13) via an amplifier (14), and that the amplifier (14) is switched to amplification for the time segment.

5. The radar device as claimed in Claim 1, **characterised in that** time intervals in which the transmitter (10) does not transmit any radar signals are adjusted as a function of the speed of the vehicle such that the time intervals increase as the speed decreases.

6. The radar device as claimed in Claim 5, **characterised in that** the transmitter (10) does not transmit any radar signals when the vehicle (15) is moving below a predetermined speed.

7. The radar device as claimed in Claim 1, **characterised in that** the state in which the receiver (21) is operational is adjusted to the speed such that the lower the speed of the vehicle (15), the shorter the state in which the receiver (21) is operational.

**Revendications**

1. Appareil radar comportant un émetteur et un récepteur pour l'émission et la réception de signaux radar, et comportant également un circuit de traitement qui détermine, par une comparaison des signaux radar émis et des signaux reçus, une information sur l'environnement, en particulier une distance et une vitesse relative par rapport à un objet, dans lequel

- le radar est monté sur un véhicule et
- l'émetteur (10) n'émet des signaux radar que dans un intervalle de temps qui est fixé, en fonction de la vitesse du véhicule (15), de telle sorte que l'intervalle soit plus long pour une vitesse plus grande, et soit plus court pour une vitesse plus petite,

   **caractérisé en ce**

- **que** l'émetteur et le récepteur émettent et reçoivent en continu des signaux radar modulés en fréquence,
- **que** l'intervalle de temps est fixé de telle façon qu'au moins un flanc montant ou descendant du signal radar peut être émis,
- **que** le secteur angulaire (16; 19) dans lequel l'émetteur (10) émet des signaux est disposé dans la direction de marche du véhicule (15) et que le secteur angulaire (16; 19) est diminué, en fonction de la vitesse du véhicule (15), avec une vitesse croissante du véhicule (15), et
- **que** le secteur angulaire (16; 19) est ajusté de façon asymétrique par rapport à la direction de marche du véhicule (15).

2. Appareil radar selon la revendication 1, **caractérisé en ce que** l'intervalle de temps est augmenté du laps de temps nécessaire à l'émetteur pour atteindre un état d'émission (a) prédéterminé qui est fixé par une puissance et/ou une stabilité de fréquence préétablies.

3. Appareil radar selon la revendication 1, **caractérisé en ce qu'**un oscillateur (26) du radar (1) peut être relié par l'intermédiaire d'un contacteur (11) à un dispositif de rayonnement (13), et que l'oscillateur n'est relié au dispositif de rayonnement (13) que pendant l'intervalle de temps.

4. Appareil radar selon la revendication 1, **caractérisé en ce qu'**un oscillateur (26) du radar (1) est connecté par l'intermédiaire d'un amplificateur (14) à un dispositif de rayonnement (13), et que l'amplificateur (14) est commuté en amplification pendant l'intervalle de temps.

5. Appareil radar selon la revendication 1, **caractérisé en ce que** des intervalles de temps pendant lesquels l'émetteur (10) n'émet pas de signaux radar sont adaptés en fonction de la vitesse du véhicule de telle manière que les intervalles de temps sont élargis lorsque la vitesse diminue.

6. Appareil radar selon la revendication 5, **caractérisé en ce que** l'émetteur (10) n'émet pas de signaux radar au-dessous d'une vitesse préétablie du véhicule (15).

7. Appareil radar selon la revendication 1, **caractérisé en ce que** l'état dans lequel le récepteur (21) est en service est adapté à la vitesse de telle façon que l'état dans lequel le récepteur (21) est en service, est plus court lorsque la vitesse du véhicule (15) diminue.

FIG 1

FIG 2

FIG 3

FIG 4

a)

b)

c)

$t_{SA}$

FIG 5

a)

b)

d)

e)

f)

c)

FIG 10

$f_0 + \frac{\Delta f}{2}$

$f_0$

$f_0 - \frac{\Delta f}{2}$

FD

31

30

T

T

TR

FIG 6

t0　t1 t4　　　t6 t2　　t5 t7 t8　　　t3　　　t

a )

b )

d )

e )

g )

f )

c )

FIG 7

tg
[ms]

25

20

g )

15

10

5

0

0　　20　　40　　60　　80　　100　　υ/[km/h]

FIG 8

FIG 9a

FIG 9b